# FASCICULE DE BREVET EUROPEEN

(11) **EP 1 895 103 B1**
(45) Date de publication et mention de la délivrance du brevet: **15.12.2010**
(21) Numéro de dépôt: 07290960.9
(22) Date de dépôt: 31.07.2007
(51) Int. Cl.: F01D 5/30

(54) **Aube de rotor d'une turbomachine**
Rotor-Leitschaufel einer Strömungsmaschine
Rotor vane of a turbomachine

(30) Priorité: 25.08.2006 FR 0607510
(43) Date de publication de la demande: 05.03.2008
(73) Titulaire: SNECMA, 75015 Paris (FR)
(72) Inventeur: Cloarec, Yvon, 77250 Ecuelles (FR)
(74) Mandataire: Ramey, Daniel

(56) Documents cités:
- FR-A1- 2 324 873
- US-A- 3 853 425

## Description

La présente invention concerne une aube de rotor, en particulier pour un compresseur d'une turbomachine telle qu'un turboréacteur ou un turbopropulseur d'avion.

Les aubes d'un étage de compresseur comprennent des pieds engagés dans des rainures axiales de la périphérie d'un disque de rotor et retenus par un flasque annulaire formé de plusieurs secteurs qui est monté par un rebord annulaire externe dans une gorge annulaire interne de la face aval du disque. Ce flasque est en appui axial à son extrémité radialement externe sur les extrémités aval des pieds des aubes, et à son extrémité radialement interne sur la face aval du disque par l'intermédiaire d'un jonc annulaire d'étanchéité. Le document FR-A1-2 324 873 décrit des flasques de rotors de turbomachine.

Le rebord annulaire interne de la gorge du disque et le rebord annulaire du flasque sont festonnés ou crénelés de façon correspondante, ce qui permet d'amener le flasque à l'intérieur de la gorge annulaire du disque par translation axiale quand les parties pleines du rebord festonné du flasque sont alignées avec les parties creuses du rebord festonné de la gorge annulaire. Le flasque est ensuite bloqué axialement par rotation dans la gorge annulaire du disque jusqu'à ce que les parties pleines du rebord festonné du flaque soient alignées avec les parties pleines du rebord festonné de la gorge annulaire du disque et soient axialement en appui sur celles-ci.

Les aubes comprennent des taquets qui sont formés sur des faces aval de leurs pieds et qui sont destinés à être engagés avec un faible jeu circonférentiel entre des parties pleines adjacentes du rebord annulaire du flasque pour assurer le blocage en rotation du flasque dans la gorge annulaire du disque. Chaque taquet a une forme allongée en direction circonférentielle et s'étend d'un bord latéral à l'autre de la face aval du pied d'aube, les extrémités latérales du taquet coopérant par butée avec les parties pleines adjacentes du rebord festonné du flasque pour son arrêt en rotation. Ce taquet est formé d'un grand volume de matière ce qui alourdit l'aube et donc le disque de rotor de manière significative.

On a déjà proposé de diminuer la masse des aubes de rotor en diminuant la longueur de leurs taquets en direction circonférentielle. Cependant, cette solution n'est pas satisfaisante car elle oblige à modifier en conséquence le rebord festonné du flasque, en augmentant l'étendue circonférentielle des parties pleines de son rebord, pour conserver le faible jeu circonférentiel précité entre les taquets et les parties pleines du rebord du flasque, ce qui se traduit également par une augmentation de la masse du flasque et donc du disque de rotor.

La présente invention a notamment pour but d'apporter une solution simple, efficace et économique à ces problèmes.

Elle propose à cet effet un disque de rotor d'une turbomachine, comprenant des aubes dont les pieds sont montés dans des rainures de la périphérie du disque, et un flasque annulaire qui est monté coaxialement sur le disque et qui s'appuie sur les pieds des aubes, chaque pied d'aube comprenant un taquet formé en saillie sur une de ses faces d'extrémité amont et aval et destiné à être engagé dans une cavité correspondante du flasque pour son blocage en rotation autour de l'axe du disque, ce taquet ayant une forme allongée en direction circonférentielle, **caractérisé en ce que** la partie centrale du taquet a une épaisseur dans une direction sensiblement perpendiculaire à ladite face d'extrémité qui est inférieure à celle des extrémités circonférentielles du taquet

Les extrémités du taquet ont une épaisseur déterminée par leur fonction de butée sur des parties pleines du rebord du flasque, et la partie centrale de ce taquet peut avoir une épaisseur beaucoup plus faible, voire nulle, sans nuire au blocage du flasque en rotation.

L'invention permet ainsi de diminuer la masse des aubes de rotor sans pour autant modifier le rebord festonné du flasque car la distance circonférentielle entre les extrémités latérales des taquets reste inchangée.

La faible épaisseur de la partie centrale du taquet n'a pas non plus de conséquence sur l'étanchéité de l'assemblage car cette étanchéité est assurée par appui de la partie radialement externe du flasque sur les pieds d'aube et par le jonc annulaire monté entre la partie radialement interne du flasque et le disque.

La partie centrale de chaque taquet peut être allégée par enlèvement de matière. Préférentiellement, elle est supprimée par usinage. Cette partie centrale a par exemple une longueur dans une direction sensiblement perpendiculaire à l'axe longitudinal de l'aube et parallèle à ladite face d'extrémité qui est au moins égale aux 3/4 ou aux 4/5 environ de la longueur du taquet.

Le pied de l'aube a par exemple une forme en queue d'aronde ou en sapin en section transversale. Le taquet de l'aube peut être formé par usinage ou obtenu de fonderie. En variante, il peut être rapporté et fixé par soudage, rivetage, vissage, collage, etc., sur le pied d'aube.

L'invention concerne encore une turbomachine, telle qu'un turboréacteur ou un turbopropulseur d'avion, **caractérisée en ce qu**'elle comprend au moins un disque de rotor tel que décrit ci-dessus.

D'autres avantages et caractéristiques de l'invention apparaîtront à la lecture de la description suivante faite à titre d'exemple non limitatif et en référence aux dessins annexés dans lesquels :
- la figure 1 est une vue schématique partielle en coupe axiale d'un disque de rotor de turbomachine;
- la figure 2 est une demi-vue schématique en coupe axiale du flasque annulaire du disque de rotor de la figure 1, à plus grande échelle ;
- la figure 3 est une vue schématique partielle en perspective du disque de rotor de la figure 1, vu de l'aval ;
- la figure 4 est une vue schématique partielle en perspective du pied d'une aube du disque de rotor de la figure 1, vu de l'aval ;
- la figure 5 est une vue schématique partielle en perspective du pied d'une aube d'un disque de rotor selon l'invention, vu de l'aval.

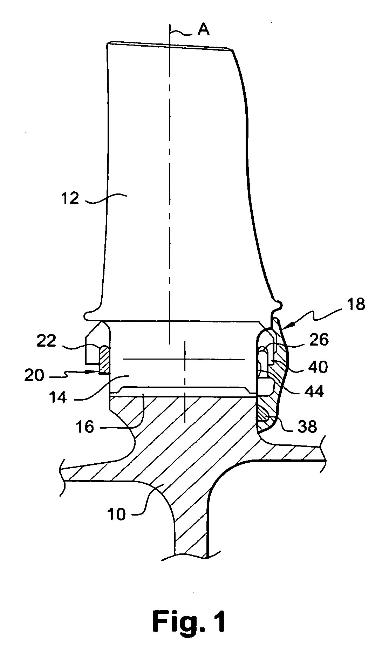

On se réfère d'abord aux figures 1 à 4 qui illustrent la technique concernée par la présente invention.

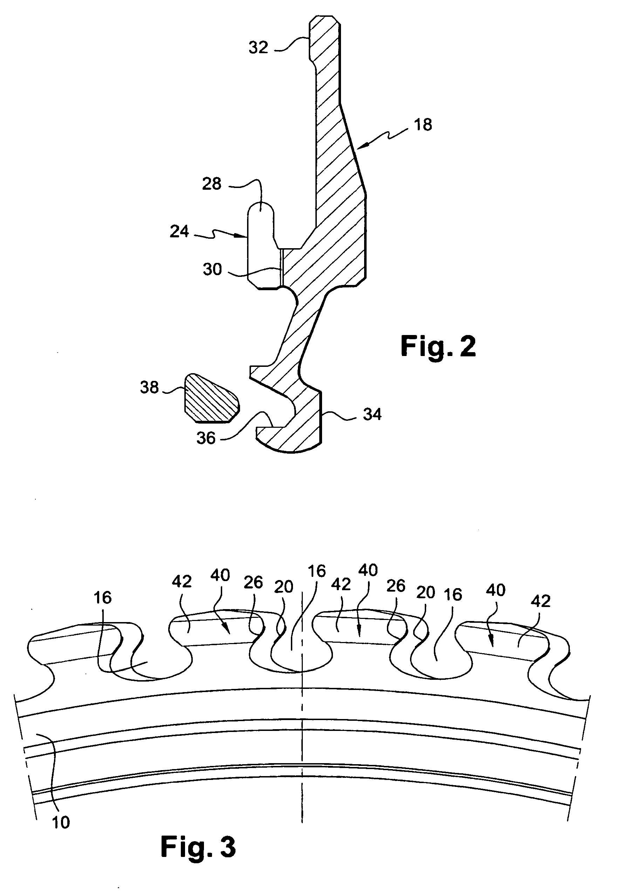

Le rotor d'un compresseur d'une turbomachine comprend une pluralité de disques de rotor, dont l'un est représenté partiellement en figures 1 et 3, chaque disque 10 portant une pluralité d'aubes 12 sensiblement radiales dont les pieds 14 sont engagés dans des rainures axiales 16 de la périphérie du disque 10.

Les pieds 14 des aubes sont maintenues radialement dans les rainures 16 du disque par coopération de formes, ces rainures 16 étant par exemple en queue d'aronde comme représenté en figure 3. Les aubes 12 sont immobilisées axialement dans les rainures 16 par un flasque annulaire 18 monté sur la face aval du disque 10 et par un anneau de verrouillage 20 monté sur la face amont du disque.

L'anneau de verrouillage 20 est fendu et est comprimé radialement pour être inséré dans une gorge annulaire 22 débouchant radialement vers l'intérieur de la face amont du disque 10. Cet anneau 20 est en appui axial sur les extrémités amont des pieds 14 des aubes du disque 10, assurant ainsi leur retenue axiale en direction de l'amont.

Le flasque annulaire 18, mieux visible en figure 2, est formé de secteurs angulaires, par exemple au nombre de cinq, et comprend en amont un rebord annulaire 24 orienté radialement vers l'extérieur et logé dans une gorge annulaire 26 débouchant radialement vers l'intérieur de la face aval du disque 10. Le rebord annulaire 24 du flasque est festonné ou crénelé, c'est-à-dire qu'il présente des parties pleines 28 formées en alternance avec des parties creuses 30 régulièrement réparties autour de l'axe du flasque.

La partie radialement externe 32 du flasque 18 est en appui axial sur les extrémités aval des pieds 14 des aubes du disque 10, assurant ainsi leur retenue axiale en direction de l'aval. Le flasque annulaire 18 comprend dans sa partie radialement interne 34 une gorge annulaire 36 débouchant axialement vers l'amont pour le logement d'un jonc annulaire 38 d'étanchéité destiné à être serré axialement entre la face aval du disque et le fond de la gorge 36 et à être déformé radialement vers l'extérieur en fonctionnement sous l'effet des forces centrifuges.

Le rebord annulaire interne 40 de la gorge 26 du disque est festonné ou crénelé comme le rebord annulaire 24 du flasque 18, ce qui permet d'engager le rebord 24 du flasque 18 dans la gorge 26 du disque par translation axiale, lorsque les parties pleines 28 du rebord du flasque sont alignées avec les parties creuses du rebord 40 de la gorge 26. Le flasque 18 est ensuite immobilisé axialement par rotation dans la gorge 26 du disque jusqu'à ce que les parties pleines 28 du rebord 24 du flasque soient alignées avec les parties pleines 42 du rebord 40 de la gorge et en appui axial sur ces parties pleines.

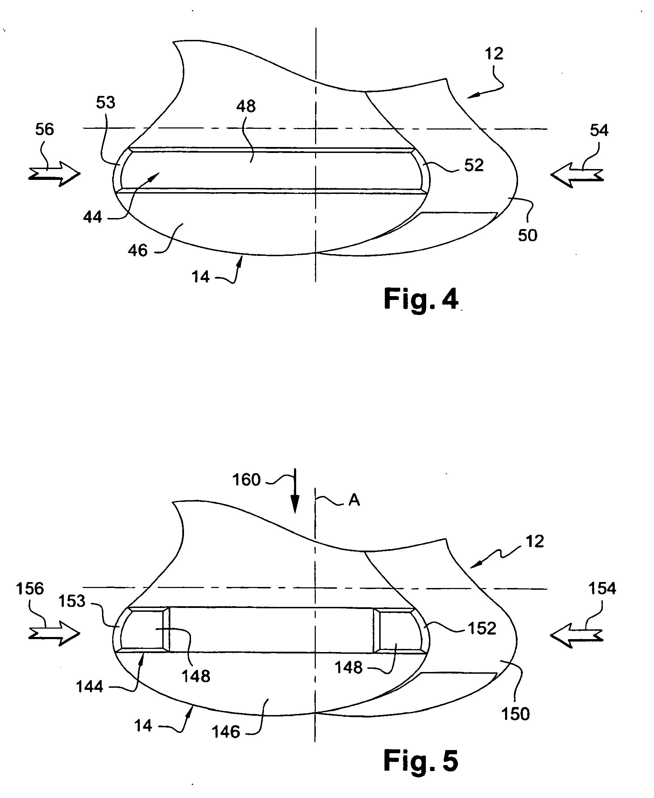

Le flasque aval 18 est immobilisé en rotation autour de l'axe du disque 10 au moyen de taquets 44 formés sur les extrémités aval des pieds 14 des aubes et destinés à s'emboîter avec un faible jeu circonférentiel dans les parties creuses 30 du rebord annulaire 24 du flasque 18 (figures 1 et 4).

Dans une réalisation connue, le taquet 44 de chaque aube 12 est formé en saillie sur une face radiale aval 46 du pied d'aube 14 et a une forme parallélépipédique qui est allongée en direction circonférentielle et s'étend d'un bord latéral à l'autre de la face aval 46 du pied.

Le taquet 44 comporte une face aval 48 sensiblement radiale qui est reliée aux faces latérales 50 du pied d'aube 14 par des faces 52, 53 destinées à venir en butée en direction circonférentielle sur des parties pleines adjacentes du rebord annulaire 24 du flasque pour son arrêt en rotation dans la gorge 26 du disque. Les faces 52, 53 peuvent être alignées avec les faces latérales 50 du pied d'aube. La face 52 du taquet, située à droite sur le dessin, est destinée à venir en butée sur une partie pleine 28 du rebord festonné du flasque pour bloquer en rotation le flasque 18 dans un sens de rotation (flèche 54 - vers la gauche sur le dessin) autour de l'axe du disque, et sa face 53, située à gauche sur le dessin, est destinée à venir en butée sur une partie pleine 28 voisine du rebord du flasque pour le bloquer en rotation dans le sens de rotation opposé (flèche 56 - vers la droite sur le dessin) autour de l'axe du disque

L'invention permet d'alléger ce type d'aube grâce à une plus faible épaisseur de la partie centrale du taquet. On entend par épaisseur du taquet la dimension du taquet dans une direction parallèle à l'axe du disque. La partie centrale du taquet a une épaisseur faible voire nulle et les extrémités latérales du taquet qui comportent les faces de butée précitées ont une épaisseur sensiblement identique à celle du taquet de la technique antérieure.

Dans l'exemple de réalisation de l'invention représenté en figure 5, la partie centrale du taquet 144 a été supprimée par usinage, les extrémités latérales du taquet 144 étant sensiblement identiques, et indépendantes et à distance circonférentielle l'une de l'autre.

Chaque extrémité du taquet 144 comprend une face aval 148 sensiblement radiale reliée à la face latérale 150 du pied d'aube la plus proche par une face de butée 152, 153. La face de butée 152 du taquet 144, située à droite sur le dessin, permet de bloquer le flasque dans le sens de rotation 154 autour de l'axe du disque, et la face de butée 153 du taquet 144, située à gauche sur le dessin, permet de bloquer le flasque dans le sens de rotation 156 autour de l'axe du disque.

La longueur et la largeur du taquet selon l'invention sont sensiblement identiques à celles du taquet de la technique antérieure. On entend par longueur du taquet la dimension du taquet dans une direction circonférentielle par rapport à l'axe du disque, et par largeur du taquet la dimension du taquet dans une direction radiale par rapport à cet axe. La longueur de la partie centrale du taquet 144 est déterminée pour d'une part réduire de manière significative la masse de l'aube 12 et d'autre part pour que les extrémités du taquet conservent une résistance mécanique suffisante pour ne pas se dégrader par butée sur des parties pleines du rebord festonné du flasque. Typiquement, la partie centrale allégée ou supprimée de chaque taquet a une longueur au moins égale aux 3/4 ou aux 4/5 environ de la longueur du taquet.

Le disque de rotor selon l'invention est assemblé de la manière suivante :
Les secteurs du flasque 18 sont montés les uns après les autres sur la face aval du disque 10 en alignant axialement les parties pleines 28 du rebord festonné du flasque avec les parties creuses du rebord festonné 40 du disque et en déplaçant les secteurs vers le disque, dans une direction parallèle à l'axe de rotation du disque, jusqu'à ce que le rebord annulaire 24 du flasque soit engagé dans la gorge 26 du disque.
Les secteurs du flasque sont ensuite déplacés en rotation dans la gorge du disque jusqu'à ce que les parties pleines 28 du rebord annulaire du flasque soient alignées axialement avec les parties pleines 42 du rebord de la gorge 26 du disque pour assurer l'immobilisation axiale du flasque sur le disque.
Les aubes 12 sont montées les unes après les autres sur le disque en engageant axialement leurs pieds 14 depuis l'amont dans les rainures 16 de la périphérie du disque, jusqu'à ce que les taquets 144 des aubes soient engagés dans les parties creuses 30 du rebord festonné du flasque et que ces taquets soient alignés transversalement avec les parties pleines 28 du rebord festonné du flasque. L'anneau 20 est ensuite comprimé radialement et engagé dans la gorge annulaire 22 de la face amont du disque pour verrouiller axialement les aubes 12 sur le disque.
Le taquet 144 selon l'invention peut être obtenu par usinage du pied d'une aube selon la technique antérieure. Pour cela, un outil approprié est déplacé une ou plusieurs fois dans une direction 160 sensiblement parallèle à l'axe longitudinal A de l'aube au niveau de la partie centrale du taquet 144 pour retirer de la matière par usinage. La partie centrale du taquet peut également être enlevée par ECM (Electrochemical Machining) ou EDM (Electrical Discharge Machining).
En variante, le taquet 144 peut être réalisé de fonderie avec l'aube 12 ou être rapporté et fixé sur le pied de l'aube.

## Revendications

1. Disque de rotor d'une turbomachine, comprenant des aubes (12) dont les pieds (14) sont montés dans des rainures de la périphérie du disque, et un flasque annulaire (18) qui est monté coaxialement sur le disque (10) et qui s'appuie sur les pieds (14) des aubes (12), chaque pied d'aube comprenant un taquet (144) formé en saillie sur une de ses faces d'extrémité amont et aval et destiné à être engagé dans une cavité correspondante du flasque pour son blocage en rotation autour de l'axe du disque, ce taquet ayant une forme allongée en direction circonférentielle, **caractérisé en ce que** la partie centrale du taquet a une épaisseur dans une direction sensiblement perpendiculaire à ladite face d'extrémité qui est inférieure à celle des extrémités circonférentielles du taquet.

2. Disque selon la revendication 1, **caractérisé en ce que** la partie centrale de chaque taquet est allégée par enlèvement de matière.

3. Disque selon la revendication 1 ou 2, **caractérisé en ce que** la partie centrale de chaque taquet est supprimée par usinage.

4. Disque selon l'une des revendications précédentes, **caractérisé en ce que** la partie centrale allégée ou supprimée de chaque taquet a une longueur dans une direction sensiblement perpendiculaire à l'axe longitudinal de l'aube et parallèle à ladite face d'extrémité qui est au moins égale aux 3/4 ou aux 4/5 environ de celle du taquet.

5. Disque selon l'une des revendications 1 à 4, **caractérisé en ce que** le pied d'aube (14) a une forme en queue d'aronde ou en sapin en section transversale.

6. Disque selon l'une des revendications 1 à 5, **caractérisé en ce que** le taquet (144) est formé par usinage ou obtenu de fonderie.

7. Turbomachine, **caractérisée en ce qu'**elle comprend au moins un disque de rotor selon l'une des revendications précédentes.

## Claims

1. Rotor disk of a turbomachine, comprising blades (12) whose roots (14) are mounted in grooves of the periphery of the disk, and an annular flange (18) which is coaxially mounted on the disk (10) and which takes support on the roots (14) of the blades (12), each blade root comprising a stop (144) formed in protrusion on one of its upstream and downstream end surfaces and adapted to be engaged in a corresponding cavity of the flange in order to be blocked in rotation about the axis of the disk, this stop having a shape elongated in a circumferential direction, **characterized in that** the central portion of the stop has a thickness in a direction that is substantially perpendicular to said end surface which is less than that of the circumferential ends of the stop.

2. Disk according to claim 1, **characterized in that** the central portion of each stop is lightened by removal of material.

3. Disk according to claim 1 or 2, **characterized in that** the central portion of each stop is removed by machining.

4. Disk according to any one of the previous claims, **characterized in that** the lightened or removed central portion of each stop has a length in a direction substantially perpendicular to the longitudinal axis of the blade and parallel to said end surface that is at least equal to approximately 3/4 or 4/5 of that of the stop.

5. Disk according to any one of claims 1 to 4, **characterized in that** the blade root (14) has a dovetail or Christmas-tree shape in cross section.

6. Disk according to any one of claims 1 to 5, **characterized in that** the stop (144) is formed by machining or obtained by casting.

7. Turbomachine, **characterized in that** it comprises at least one rotor disk according to any one of the previous claims.

## Patentansprüche

1. Rotorschaufelrad für Turbotriebwerke mit Schaufeln (12), deren Schaufelfüße (14) in Rillen am Außenumfang des Schaufelrades angebracht sind, und mit einem ringförmigen Flansch (18), der koaxial an dem Schaufelrad (10) angebracht ist und der an den Füßen (14) der Schaufeln (12) anliegt, wobei jeder Schaufelfuß einen Vorsprung (144) aufweist, der an einer seiner vorderen und hinteren Endseiten hervorstehend ausgebildet ist und dazu bestimmt ist, zu seiner Blockierung in Drehrichtung um die Achse des Schaufelrades in Eingriff in eine entsprechende Vertiefung an dem Flansch zu kommen, wobei dieser Vorsprung eine in Richtung der Umfangslinie längliche Form aufweist,
**dadurch gekennzeichnet,**
**dass** der zentrale Teil des Vorsprungs in einer im Wesentlichen rechtwinklig zu der genannten Endseite verlaufenden Richtung eine Stärke hat, die geringer ist als die Stärke der Umfangslinien-Enden des Vorsprungs.

2. Schaufelrad nach Anspruch 1,
**dadurch gekennzeichnet,**
**dass** der zentrale Teil jedes Vorsprungs durch Materialabtrag erleichtert ist.

3. Schaufelrad nach Anspruch 1 oder 2,
**dadurch gekennzeichnet,**
**dass** der zentrale Teil jedes Vorsprungs durch Bearbeiten entfernt wird.

4. Schaufelrad nach einem der vorherigen Ansprüche,
**dadurch gekennzeichnet,**
**dass** der erleichterte oder entfernte zentrale Teil jedes Vorsprungs in einer im Wesentlichen rechtwinklig zur Längsachse der Schaufel und parallel zu der genannten Endseite verlaufenden Richtung eine Länge hat, die mindestens ca. 3/4 oder 4/5 der Länge des Vorsprungs beträgt.

5. Schaufelrad nach einem der Ansprüche 1 bis 4,
**dadurch gekennzeichnet,**
**dass** der Schaufelfuß (14) im Querschnitt schwalbenschwanzförmig oder tannenbaumförmig ausgeführt ist.

6. Schaufelrad nach einem der Ansprüche 1 bis 5,
**dadurch gekennzeichnet,**
**dass** der Vorsprung (144) durch Bearbeiten geformt oder durch Gießen hergestellt wird.

7. Turbotriebwerk,
**dadurch gekennzeichnet,**
**dass** es mindestens ein Rotorschaufelrad nach einem der vorherigen Ansprüche aufweist.
